# EUROPÄISCHE PATENTANMELDUNG

(11) **EP 1 882 508 A2**
(43) Veröffentlichungstag der Anmeldung: **30.01.2008**
(21) Anmeldenummer: 07405220.0
(22) Anmeldetag: 26.07.2007
(51) Int. Cl.: B01D 17/02, B01D 21/01, B01D 21/24, B01D 21/26, B01D 29/11, E03F 5/14, E03F 5/16

(54) **Verfahren und Vorrichtung zum Reinigen von mit Grob-, Fein- und Feinststoffen verschmutztem Abwasser sowie ein Filter für die Filtration von mit Grob-, Fein- und Feinstoffen verschmutztem Abwasser**

(30) Priorität: 28.07.2006 CH 12312006; 04.09.2006 CH 14102006
(71) Anmelder: Oekag Wassertechnik (Schweiz) AG, 6005 Luzern (CH)
(72) Erfinder: Morandini, Giorgio, 6005 Luzern (CH)
(74) Vertreter: Gachnang, Hans Rudolf

(57) **Zusammenfassung**

Beim Verfahren zur Reinigung von Abwässern aus Baustellen, dem Bergbau oder der Industrie wird das mit Festkörpern unterschiedlicher Grösse und allenfalls auch Ölen oder gelösten Schadstoffen belastete Abwasser in einem Behälter (101) eingeleitet, in welchem vorerst durch Gravitation die grösseren Feststoffe am Boden des Behälters im Sammelraum (30) gesammelt werden. Durch geeignete Führung des Abwassers wird im Behälter eine Strömung erzeugt, die sich in eine im Zentrum befindliche ruhige Steigzone und eine sich in Bewegung befindliche äussere Zone aufteilt. In der beruhigten Zone (19) können auch sehr kleine Feststoffe langsam absinken und aufschwimmbare Stoffe nach oben steigen. Im Bereich der Wasseroberfläche wird das durch Gravitation vorgereinigte bzw. von Feststoffen befreite Abwasser zu einem Querstrom-Filter geleitet. Die vom Filterelement (25) zurückgehaltenen Feststoffe fallen in der Kammer (10) des Querstrom-Filters nach unten und können abgeführt werden.

Ein oder mehrere Filterelemente (25) können als rohrförmiger Filterschlauch oder als Platten ausgebildet sein, die an den Enden gehalten und abgedichtet werden.

## Beschreibung

Gegenstand der Erfindung ist ein Verfahren zum Reinigen von mit Grob-, Fein- und Feinststoffen verschmutztem Abwasser gemäss Oberbegriff des Patentanspruchs 1. Gegenstand der Erfindung ist weiter eine Vorrichtung gemäss Patentanspruch 5. Gegenstand der Erfindung ist weiter ein Filter zum Ausfiltern von gelösten Schad- oder Feststoffen aus Flüssigkeiten und Gasen gemäss Patentanspruch 10.

Baustellen, Bergbau- und Industrieabwässer sind mit Feststoffen, wie Beton- oder Gesteinsabrieb, sowie mit kleinen und grösseren Steinen und/oder mit gelösten Schadstoffen belastet. Die ungleiche Korngrösse der Feststoffe sowie deren prozentuale Aufteilung oder die gelösten Stoffe verlangen bei der Reinigung unterschiedliche Reinigungsverfahren. Grössere Feststoffe, wie Kies und Steine, mit einer spezifischen Dichte, die grösser ist als diejenige des Wassers, können verhältnismässig einfach durch Gravitation/Sedimentation auch in bewegtem Wasser ausgeschieden werden. Feinere und Feinststoffe oder gelöste Schadstoffe verlangen einen höheren Aufwand. Da alle Stoffe gleichzeitig anfallen, muss eine Vorrichtung zur Reinigung von Baustellen und Bergbauabwässern mit unterschiedlichen physikalischen Trennmethoden arbeiten. Nebst den genannten Stoffen können solche Abwässer auch mit aufschwimmbaren Stoffen wie Holzteilen, Kunststoffteilen etc. befrachtet sein, welche eine komplett unterschiedliche Trennmethode verlangen. Nebst den suspendierten Stoffen können auch emulgierende Stoffe wie Öle, Fette sowie wasserlösliche Stoffe im Abwasser vorhanden sein.
Es ist bekannt, dass Baustellenabwasser, das stark mit partikulären Stoffen beladen ist, wenn zum Beispiel Betonoberflächen mit Hoch- oder Höchstdruck gereinigt werden oder wenn gebohrt oder mit Trennscheiben gefräst und Steinoberflächen abgeschliffen werden, nicht einem Gewässer oder einer Kanalisation zugeführt werden darf. Auch Abwässer mit viel Schluff und Ton aus Aushubwaschanlagen oder Betonitschlämme zur Grubenabdichtung dürfen nicht direkt abgeführt werden.

Mit den bekannten Verfahren und Vorrichtungen werden meist nur einzelne Fraktionen sicher aus dem verschmutzten Abwasser entfernt, wobei insbesondere die Feinstanteile und gelöste Stoffe zurückbleiben. Werden gravitativ arbeitende Behandlungsanlagen oder Filter eingesetzt mit denen auch Feinstanteile ausfiltrierbar sind, so neigen diese zu rascher Verstopfung, welche eine Rückspülung oder einen Austausch der Filterelemente verlangt, oder es müssen zusätzlich Absetzanlagen für Feinstoffe eingesetzt werden, welche viel Raum benötigen.

Eine Aufgabe der vorliegenden Erfindung ist die Schaffung eines Verfahrens und einer Vorrichtung zur Reinigung von partikulär stark mit Grob- und mit Feinstoffen verschmutztem Abwasser, insbesondere für die Anwendung bzw. Verwendung auf Baustellen, im Bergbau oder in der Industrie, welche in einer kompakten, leicht transportierbaren, d.h. auf Baustellen mit geringem Platzangebot aufgestellt und betrieben werden kann. Eine weitere Aufgabe der Erfindung besteht darin, dass mit dem erfindungsgemässen Verfahren bzw. der erfindungsgemässen Vorrichtung die ungelösten Feststoffe aus dem Abwasser entfernt werden können. Eine weitere Aufgabe der Erfindung besteht darin, einen Filter zu schaffen, der eine geringe Neigung zur Verstopfung durch Feinstanteile aufweist und auf einfache Weise gewartet oder ausgewechselt werden kann. Baustellenabwasser kann alkalisch sein. Solches Wasser muss neutralisiert werden, z.B. mit CO2 Begasung. Die Neutralisationsvorrichtung kann in die Filteranlage integriert werden.

Gelöst werden diese Aufgaben durch ein Verfahren mit den Merkmalen des Patentanspruchs 1, durch eine Vorrichtung mit den Merkmalen des Patentanspruchs 5 sowie durch einen Filter gemäss Patentanspruch 10.

Es gelingt, mit dem erfindungsgemässen Verfahren bzw. der erfindungsgemässen Vorrichtung, mehrere Trennstufen und Behandlungsanlagen zu kombinieren und diese auf kleinstem Raum in einem transportierbaren Behälter mit einer Zuleitung für das verunreinigte Abwasser und einer Ableitung des gereinigten Abwassers unterzubringen. Durch den Einsatz der Querstromfiltration (Cross-Flow) können Feinststoffe ausgefiltert werden, ohne dass eine Verstopfung der Filter eintritt bzw. eine Rückspülung des Filters in kurzen Abständen notwendig wird. Die Filterfläche kann auch für grossen Durchsatz sehr klein gehalten werden, so dass sich der Filter ohne Hilfe von Hebemitteln bei Bedarf austauschen und/oder reinigen lässt.

Anhand illustrierter Ausführungsbeispiele wird das Verfahren und die Vorrichtung sowie der Filter nachfolgend beschrieben. Es zeigen
- Figur 1: einen Vertikalschnitt durch einen Behälter, welcher die Vorrichtung enthält,
- Figur 2: einen Horizontalschnitt durch den Behälter in Figur 1 entlang Linie A-A,
- Figur 3: einen Horizontalschnitt durch den Behälter in Figur 2 entlang Linie B-B,
- Figur 4: einen Axialschnitt durch den Filter,
- Figur 5: einen Horizontalschnitt längs Linie C-C durch den Filter in Figur 4,
- Figur 6: einen Axialschnitt durch ein Filterelement (gestaucht),
- Figur 7: eine Aufsicht auf einen Behälter in einer weiteren Ausführungsform,
- Figur 8: einen Vertikalschnitt entlang der Linie D-D durch den Behälter in Figur 7,
- Figur 9: einen Axialschnitt durch einen Behälter gemäss Figur 1 mit einer zusätzlichen Flockungs- und Begasungseinrichtung,
- Figur 10: einen Horizontalschnitt durch eine weitere Ausführungsform eines Behälters,
- Figur 11: eine Teilansicht des Behälters gemäss Figur 10 auf Richtung des Pfeils C,
- Figur 12: einen Axialschnitt durch eine weitere Ausführungsform des Behälters,
- Figur 13: eine Aufsicht auf den Behälter gemäss Figur 12,
- Figur 14: eine vergrösserte Darstellung des Bereichs X in Figur 12,
- Figur 15: einen Teil-Axialschnitt durch die Aufhängung des Filters,
- Figur 16: einen Axialschnitt durch einen in einer Erdgrube eingesetzten Filter,
- Figur 17: einen Axialschnitt durch einen in einer Erdgrube eingesetzten Filter in einer weiteren Ausführungsform,
- Figur 18: eine Detailansicht des Filterelements mit Magnetdichtung,
- Figur 19: eine vergrösserte Darstellung des Bereichs X der Magnetdichtung in Figur 18,
- Figur 20: einen schematischen Plattenfilter,
- Figur 21: eine vergrösserte Darstellung einer weiteren Ausführung einer Dichtung.

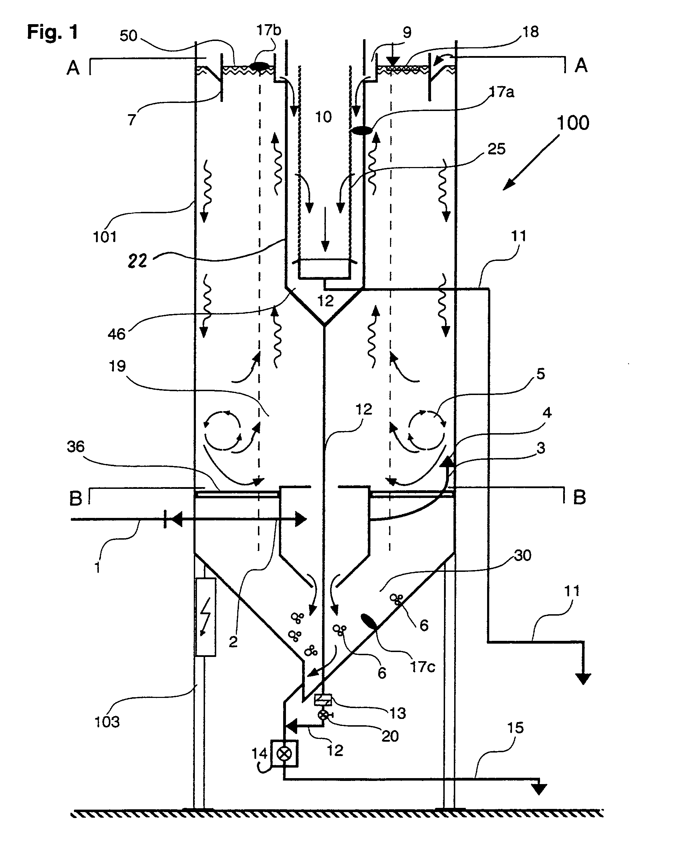

In Figur 1 ist eine Baustellen-Abwasserreinigungsanlage 100 schematisch dargestellt. Die Abwasserreinigungsanlage 100 ist in einem zylindrischen Behälter 101 aus Stahl oder Kunststoff eingebaut, welcher auf Füssen 103 aufgebockt ist. Die Füsse 103 gewährleisten eine gute Zugänglichkeit zur Unterseite mit den Entnahmeöffnungen des Behälters 101. Mit Bezugszeichen 1 ist die Zulaufleitung von Abwasser aus einem nicht dargestellten Pumpensumpf bezeichnet. Mit einem Rückschlagventil wird verhindert, dass aus dem Behälter 101 Abwasser zurück in den Pumpensumpf gelangen kann, im Falle dass die Pumpe aussetzt. Der Zulauf 1 erfolgt tangential in eine Misch-, Trenn- und Lenkvorrichtung 2, welche beispielsweise einen zylindrischen Körper umfasst, der unten konisch zulaufend ausgebildet sein kann und in welchem grobe Schwerstoffe (Kies, Steine) 6 durch Zentrifugal- oder Schwerkraft nach unten in den Sammel- und Bodenbereich 30 des Behälters 101 gelangen. Aus der Lenkvorrichtung 3 gelangt das von Kies und groben Steinen bereits befreite Abwasser in den Behälter 101 und, da tangential eingeleitet, bewirkt es dort eine drehende aufsteigende Strömung. Die in einer oder mehreren Lenkvorrichtungen 3 entstandene Strömung kann vorteilhaft über verstellbare Fluidstrom-Lenkmittel 3a, 3b als genau leitbarer Fluidstrom 4 seitlich oder nach oben und an die Behälteraussenwand 101 geführt werden. Die Lenkvorrichtung 3 und eine hydraulische Trennvorrichtung 36 verhindern die Aufwirbelung und das Mitschleppen der Sedimente aus dem Sammel- und Absetzbereich 30. Durch die Strömung entstehen Wirbel 5 im äusseren peripheren Bereich des Behälters 101. Im achsnahen zentralen Bereich 19 beruhigt sich das Wasser und es entsteht eine Aufsteigezone für sedimentierbare und aufschwimmbare Stoffe. Am Rande dieser beruhigten Zone 19 sinken Stoffe mit einer Dichte, die grösser ist als diejenige des Wassers langsam nach unten und gelangen in den darunter liegenden Sammelbereich 30. Spezifisch leichtere Feststoffe steigen auf und gelangen an die Wasseroberfläche, wo sie gesammelt und abgeführt werden können.
In der beruhigten Steig- und Sinkzone 19 kann emulgiertes Öl oder Benzin zur Wasseroberfläche aufsteigen und dort durch entsprechend präparierte Pads oder Aufsaugkörper 18 oder Abscheidevorrichtungen absorbiert und abgetrennt werden. Der aufsteigende, bereits von den grösseren Feststoffen befreite Fluidstrom 4 wird oben zu einer Überlaufrinne 7 mit vorzugsweise v-förmigem Querschnitt geleitet. Aus der Überlaufrinne 7 wird das Abwasser durch radial verlaufende Verbindungen oder Rohre 8 zum Zentrum des Behälters 101 hingeleitet und gelangt dort in eine Kammer 10. Die Kammer 10 bzw. deren Wandung kann oben als Rinne 9 ausgebildet sein, d.h. einen grösseren Querschnitt aufweisen als im unteren Bereich. In der Kammer 10 ist ein Filtertopf 22 eingesetzt, auf dem ein oder mehrere Filterelemente 25, z.B. eine Filtermembran, aufgesetzt ist. Die Kammer 10 und das Filterelement 25 bilden zusammen einen Querstromfilter (Cross-Flow-Filter), in welchem das zu reinigende Abwasser von aussen durch das Filterelement 25 nach innen fliesst und das gereinigte Abwasser am Boden des Filtertopfs 22 durch eine Filtratablaufleitung 11 abgeleitet werden kann. Die von den Filterelementen 25 an seiner Peripherie zurückgehaltenen Feststoffe können auf der Aussenseite des Filterelements 25 durch Gravitation und durch den von oben aus der Überlaufrinne 7 zufliessenden Wasserstrom in der Kammer 10 nach unten in den Schlammsammelraum 46 gelangen und werden dort durch einen Schlammablauf 12 abgeleitet. Am Schlammablauf 12 kann in seinem unteren Bereich ein Schwing- oder Rüttelmittel 13 angeordnet sein, welches eine Verstopfung vor einem dort eingesetzten Ventil 20 verhindert. Die vertikale Schlammablaufleitung 12 kann als Stützkonstruktion der Kammer 10 und der Trenn- 2 und Lenkvorrichtung 3 dienen. Alle Elemente wurden durch Vibration von verblockenden Teilen befreit oder vor Brückenbildung geschützt. Vom Filtratablauf 11 gelangt das nun partikelfreie Filtrat (das gereinigte Abwasser) zur Weiterbehandlung, z.B. Neutralisation oder direkt in ein Gewässer oder einen Vorfluter. Die Sedimente, welche sich am Behälterboden im Sammelbereich 30 angesammelt haben, können durch eine Pumpe 14 kontinuierlich oder periodisch aus dem Behälter 101 abgesaugt und durch eine Schlamm- und Feststoffleitung 15 der Entsorgung zugeführt werden. Das Absaugen des Schlamms aus feinsten Partikeln aus der Kammer 10 und das Abführen der groben Verunreinigungen (Kies, Steine und Schlamm) aus dem Sammelbereich 30 des Behälters 101 kann ohne Unterbruch des Reinigungs- und Trennverfahrens jederzeit erfolgen.

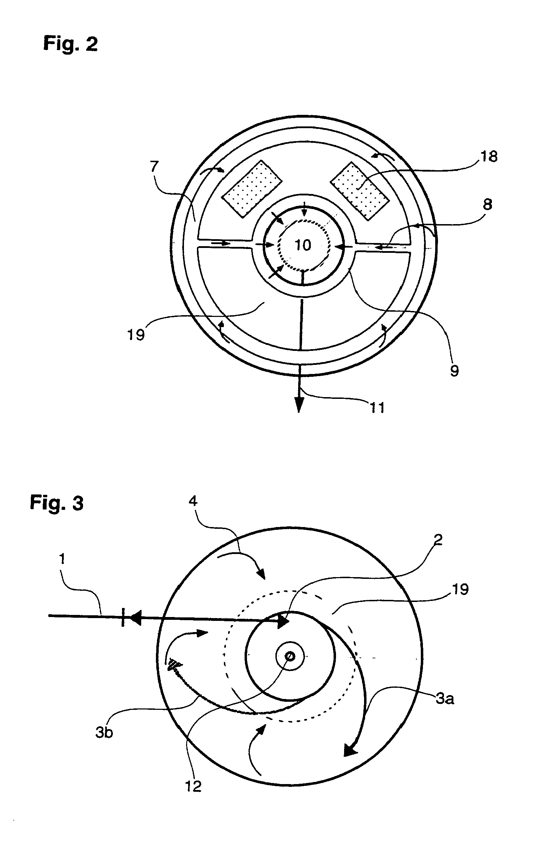

In der Figur 2 ist eine mögliche Geometrie des Behälters 101 im Bereich des Schnitts A-A, d.h. über der Wasseroberfläche, ersichtlich.

Die Figur 3 zeigt die Geometrie des Behälters 101 im Bereich der Lenkvorrichtung 3.

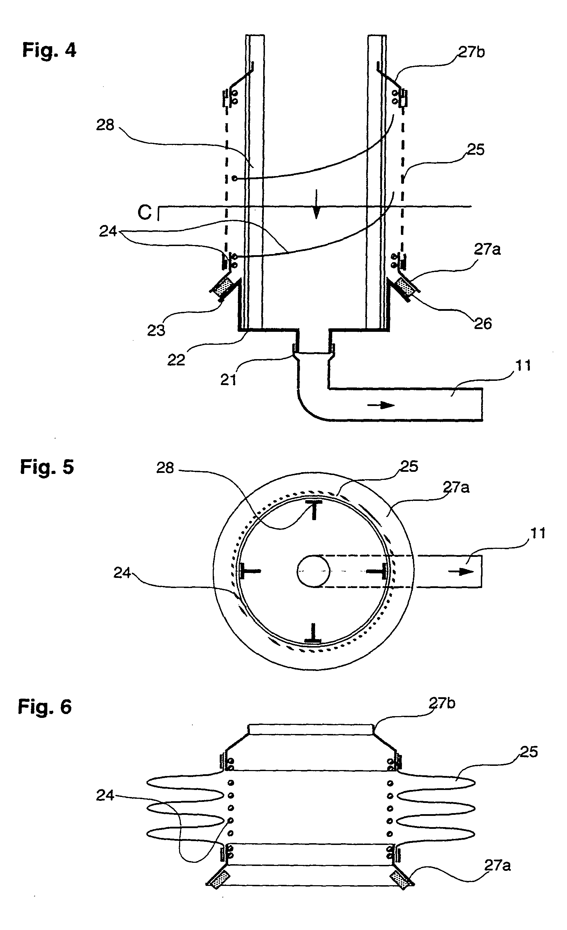

In Figur 4 ist, wesentlich vergrössert, das Filtermodul dargestellt, umfassend den Filtertopf 22 sowie das Filterelement 25. Der Filtertopf 22 ist abnehmbar auf einer Steckmuffe 21 am Filterablaufrohr 11 aufgesteckt. Dies ermöglicht es, den Filtertopf 22 mit dem Filterelement 25 und der Stützkonstruktion 28 aus der Kammer 10 herauszulösen.

Das Filterelement 25 umfasst in dieser Ausbildung einen rohrförmigen Filter, beispielsweise einen Geotextil-Filter aus einem Vlies oder aus einer Membran oder einem Gewebe gefertigt, welcher Filter oben und unten auf einem Ring 27b und 27a befestigt ist. Die Befestigung an den Ringen 27a und 27b erfolgt vorzugsweise durch eine Bride oder ein anderes klemmendes Mittel. Zwischen den beiden Ringen 27a und 27b ist eine Schraubenfeder 24 als Druckfeder eingesetzt, welche einerseits an ihren Enden die beiden Ringe 27a und 27b trägt und diese in axialer Richtung beabstandet hält und andererseits dienen die Windungen der Feder 24 der Abstützung des schlaffen schlauchförmigen Filters gegen Druckkräfte von aussen. Zusätzlich hält die Druckfeder 24 den schlauchförmigen Filter axial straff gespannt.

Am unteren Ring 27a kann zusätzlich ein Dichtungsring 26 angebracht sein, welcher auf einem Flansch 23 am Filtertopf 22 dichtend anliegt. Am Filtertopf 22 ist vorzugsweise zusätzlich eine Stützkonstruktion in Gestalt von mehreren vertikal liegenden Profilstäben 28 angeordnet. Die Stützkonstruktion hält das Filterelement 25 zentriert in der Kammer 10 fest.
Aus den Figuren 4 und 6 ist zudem ersichtlich, dass der untere Ring 27a vorzugsweise konisch ausgebildet ist, so dass das Filterelement 25, wenn auf den Kragen oder Flansch 23 am Filtertopf 22 aufgesetzt, sich selbst ausrichtet.

Figur 6 zeigt das Filterelement 25 losgelöst aus dem Filtertopf 22 und mit axial zusammengepresster Feder 24. In dieser zusammengepresster Form lässt sich ein an sich axial langes Filterelement stauchen und auf kleinem Raum lagern und transportieren. Auch der Austausch des schlaffen Filterschlauchs kann in dieser zusammengepressten Stellung, bei der die Ringe 27a und 27b näher beieinander liegen, ohne weiteres durchgeführt werden.

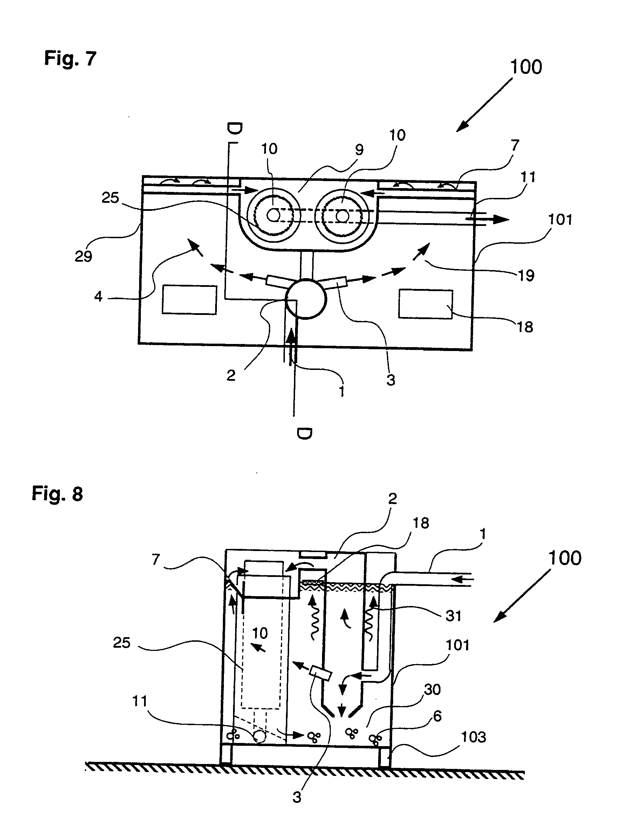

In den Figuren 7 und 8 ist ein Behälter 101 einer weiteren Ausführungsform der Anlage 100 ersichtlich. Der Behälter 101 ist rechteckig. Ein kubischer Behälter 101 kann besonders einfach mit einem auf der Baustelle ohnehin vorhandenen Gabelstapler auf- und umgestellt werden. Es können auch mehrere Behälter zur Kapazitätsvergrösserung übereinander gestapelt werden.
Im Behälter 101 sind bei dieser Ausgestaltung der Erfindung zwei Cross-Flow-Kammern 10 angeordnet. Diese werden wiederum mit aufsteigendem, bereits von den grösseren Feststoffen befreitem Abwasser über die Rinnen 7 gespeist. Die Rinnen 7 sind gleichzeitig als Tauchwände ausgestaltet, um den Zutritt von aufschwimmenden Verunreinigungen zu verhindern. Das in die Trenn- und Lenkvorrichtung 2 eingeleitete verschmutzte Abwasser gelangt seitlich durch Lenkmittel oder Rohre 3 in den Behälterraum und wird dort durch den dauernden Zufluss nach oben gefördert. Der im Verhältnis zum Querschnitt der Kammern 10 grosse Querschnitt des Behälters 101 erlaubt es den feinen und feinsten Feststoffen langsam abzusinken und sich im Sammelbereich 30 abzulagern. Die aufschwimmbaren Stoffe können gleichzeitig nach oben wandern und dort bei Bedarf entnommen werden.

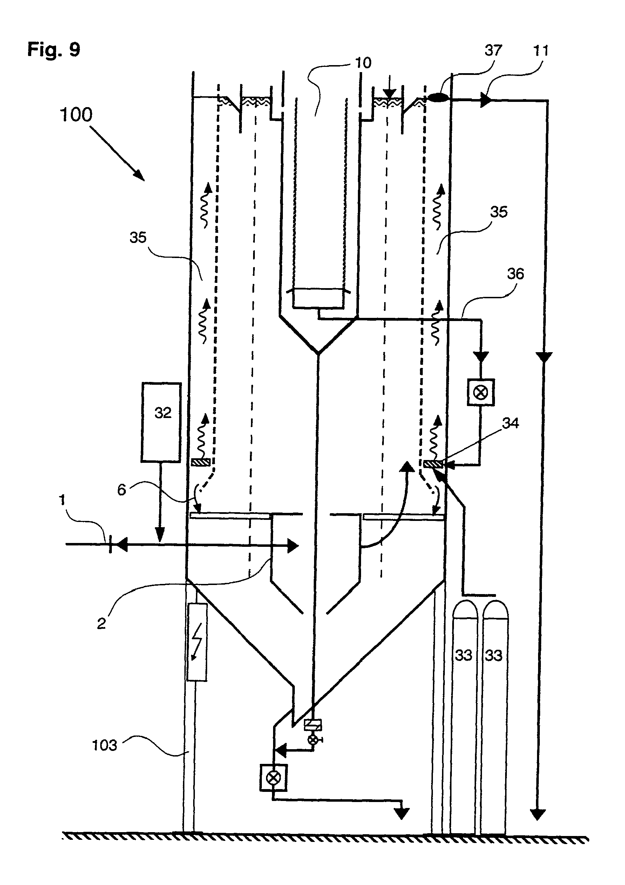

In der Figur 9, die in grossen Teilen mit der Figur 1 übereinstimmt, ist im Behälter 101 zusätzlich eine Begasungsvorrichtung 34 zum Einleiten von CO2-Gasen angeordnet. Die Begasungsvorrichtung 34 ist vorzugsweise ringförmig ausgebildet und wird durch ausserhalb des Behälters 101 angeordnete Gasbehälter 33 gespiesen. Weiter ist auf der linken Seite der Figur 9 ein Wirkstoffbehälter 32 angeordnet, aus welchem in die Zulaufleitung 1 ein Wirkstoff eingeleitet werden kann, welcher eine Ausflockung von im Abwasser gebundenen Stoffen bewirkt. Die Zuführung von Adsorbentien ermöglicht das Binden gelöster Stoffe, z.B. von Schwermetallen, die anschliessend in der Trennvorrichtung 2 gravitativ oder durch das Filterelement abgeschieden werden können. Durch die Ausflockung können folglich auch Stoffe wie die ungelösten Feststoffe vom Abwasser getrennt werden. Die Begasung bewirkt, dass in einer Neutralisierungszone 35, wo das Gas in kleinen Blasen aufsteigt, eine Neutralisation des Abwassers eintritt, welche durch eine Sonde 37 bezüglich des pH-Wertes gemessen werden kann. Falls eine Begasungsvorrichtung 34 eingebaut ist, kann es sinnvoll sein, den Filtratablauf 36 nochmals im Bereich des Gasaustritts im Behälter einzuleiten.
Die Neutralisation des Abwassers kann mit geeigneten feinen Blasen und Lenkmitteln auch in einer räumlich nicht getrennten Neutralisierungszone erfolgen (nicht dargestellt).

Nachfolgend wird kurz die Funktions-Betriebsweise des Verfahrens und der Vorrichtung beschrieben.

Das aus dem Pumpensumpf geförderte Abwasser wird von der Trenn- 2 und einer oder mehrerer Lenkvorrichtungen 3 im wesentlichen tangential in den Behälter eingeleitet, nachdem zuvor in der Trenn- und Lenkvorrichtung 2 die grössten Festkörper 6 durch Gravitation nach unten in den Sammelraum 30 abgesunken sind. Der Fluid- und Partikelstrom, der eventuell auch mit Luftblasen und/oder mit Feinsand und Schluffton-Partikel vermischt ist, wird tangential kreisend zur aussenliegenden Behälterwand und entlang dieser geleitet. Dadurch entsteht eine Wasserwalze 5, die den Wasserstrom zur Behältermitte führt. Hilfsweise können an der Behälterwand angebrachte Leitlamellen das Fliessverhalten des Wasserstroms optimieren (Leitlamellen nicht eingezeichnet). Die lange schraubenlinienartige, aufsteigende Fliessstrecke entlang der Behälterwand und die in diesem Bereich verursachte Wirbelwalze mit dem stehenden Wasser ermöglicht eine weitgehende gravitative Partikelsedimentation feiner Schwebestoffe. Es entsteht auf diese Weise eine Fluid-Zwangsführung in der beruhigten Zone 19 nach oben und entlang der Behälterwand zur Überlaufrinne 7. Die mit dem Fluid transportierten feinen Partikel wandern mit der zur Behältermitte drehenden Wasserwalze 5 zum zentralen Bereich 19 und sinken nach unten ab. Oben auf dem Niveau des höchsten Wasserstands verläuft das Abwasser beruhigt in eine lange, der Behälterwand entlanggeführte kreisringartige Überlaufrinne 7. Diese Rinne 7 wirkt als Tauchwand oder ist zusätzlich mit einer Tauchwandblende verlängert. Der Zuströmbereich ist damit gut von der Leichtstoff-Sammelfläche 50 im Zentrum des Behälters 101 getrennt.
Das in der kreisringförmigen Überlaufrinne 7 oder im radialen Überlauf gesammelte Abwasser wird anschliessend mit im wesentlichen radial verlaufenden Verbindungen 8 zur nicht gefluteten Kammer 10 geleitet. Es überströmt dort als Cross-Flow (CF) das oder die vertikal angeordneten Filterelmente, welche als Barriere wirken. Angeschwemmte Feinstoffe, die grösser als die Filterporen sind, werden zurückgehalten. Vom Filterelement werden alle noch im Wasser vorhandenen Partikel zurückgehalten und durch das gleichmässige Überspülen der Aussenseite des Filterelements 25 wird dem Verblocken/Verstopfen des Filters entgegen gewirkt. Die Strömung des zufliessenden Abwassers treibt den ausserhalb am Filter zurückgehaltenen Feinschlamm nach unten und sammelt sich unten im Schlammsammelraum. Dieser steht unten in Verbindung mit dem Ablaufrohr 12. Das Schlammablaufrohr 12 kann mit einem Generator oder einer anderen eine Schwingung erzeugenden Vorrichtung verbunden sein, um eine Brückenbildung von Ablagerungen vor der Schlammpumpe und in den Einbauten zu verhindern.

In Abhängigkeit der hydraulischen Flächenbelastung entsteht zwischen dem Filter und der Kammer 10 ein unterschiedlich hoher Wasserrückstau. Ein grösserer Wasserrückstau führt zu grösserem Filterdurchsatz. Das Filtrat wird über die Ableitung 11 aus dem Filterinnenraum permanent und drucklos zur nächsten Behandlungsstufe, sofern nötig, abgeleitet. Ohne Wasserzulauf, z.B. während Betriebspausen, Wochenenden etc., entleert sich die Cross-Flow-Kammer 10 auf das Niveau des Filtratauslaufs und das Filterelement fällt dabei trocken. Dem Fouling wird damit entgegen gewirkt.

Der Durchsatz des Filters bzw. dessen Verstopfung/Verblockung kann durch Sensoren 17a in der Kammer detektiert werden. Bei einem zu grossen Überstau kann damit die Zufuhr von Abwasser gestoppt und auch, falls vorhanden, die Zufuhr von Flockungsmitteln oder Adsorbentien gestoppt werden. Sämtliche für den Betrieb/die Wartung/die Steuerung notwendigen Elemente sind von aussen zugänglich.

Wird ein Filterersatz notwendig, so kann letzterer, d.h. das Filterelement 25 von oben aus der Kammer 10 von Hand herausgehoben und die schlaffe schlauchförmige Membran in der Werkstatt ausgetauscht werden. Die Wiedermontage eines ersetzten oder neuen Filtermoduls erfolgt in umgekehrter Weise, indem letzteres von oben in die Kammer eingeführt und auf dem Kragen 26 des Filtertopfs aufgesetzt wird. Es ist auch möglich, das Filterelement 25 mit dem Filtertopf 22 von der Muffe 21 des Filtratablaufrohres 11 zu heben und auszutauschen.

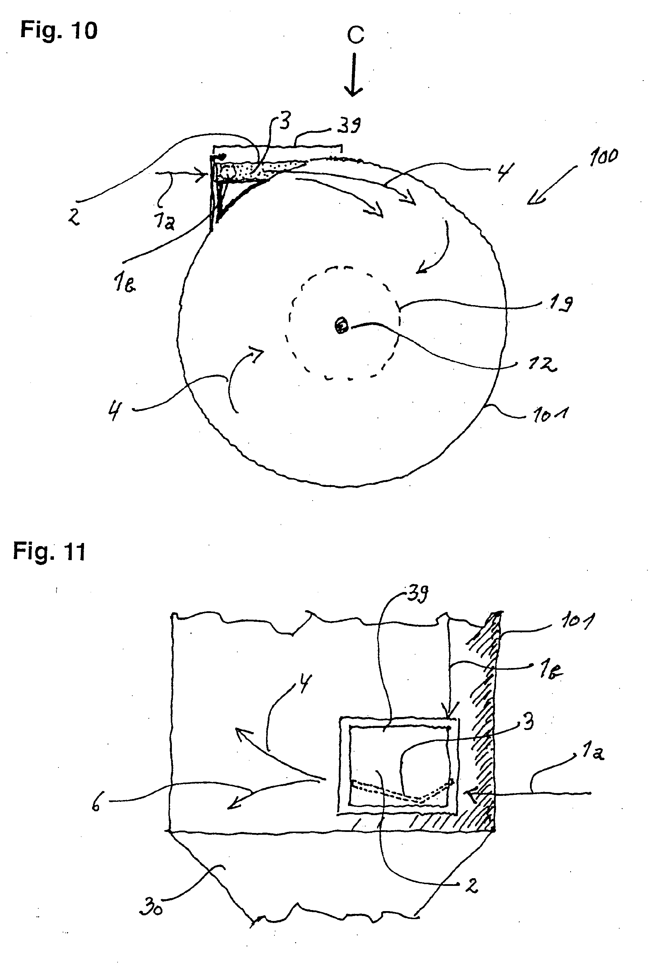

In Figur 10 wird eine alternative Art des Zulaufs 1a oder 1b in den Behälter 101 dargestellt. Die kastenförmig ausgeprägte Trennvorrichtung 2 ist bei diesem Ausführungsbeispiel in die Behälteraussenwand integriert. Die Lenkvorrichtung 3 ist in Form von eingebauten Lamellen oder Rinnenboden ausgeführt (in gebrochenen Linien dargestellt). Der Fluidstrom 4 wird durch eine schlitzförmige stehende Öffnung an die Behälterinnenwand und nach oben geleitet. Durch einen Deckel 39 sind die Einbauten in der Lenkvorrichtung 3 zugänglich und können ausgerichtet oder bei Abrasion ausgetauscht werden. Feinpartikel und Leichtstoffe werden nach oben geleitet, Schwerstoffe fallen an der Behälterwand nach unten in den Sammelbereich 30.
Die Trennvorrichtung 2 kann wahlweise seitlich oder von oben angeströmt werden (vgl. Pfeil 1b in Figur 11). Bei genügender Grösse kann der Deckel 39 an der Trennvorrichtung 2 gleichzeitig als Mannloch benutzt werden.
Die von aussen zugängliche Trennvorrichtung ist einfacher und damit kostengünstiger als die eingebaute Trennvorrichtung gemäss Figur 9. Zudem kann das Lenkmittel von aussen justiert oder ausgetauscht werden.

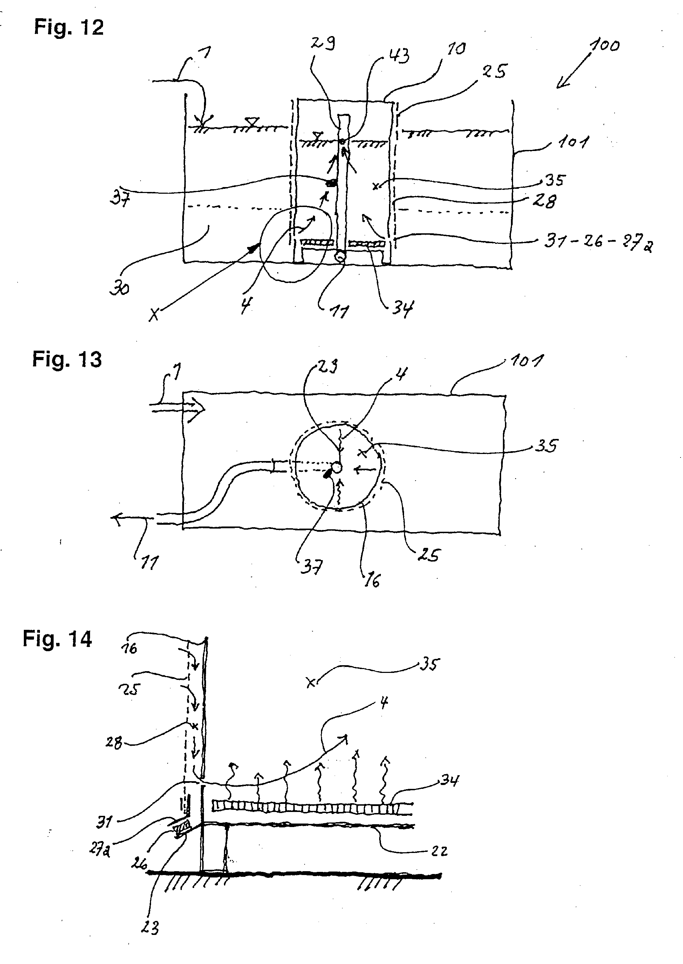

In der Ausführungsform gemäss den Figuren 12 und 13 ist einerseits eine alternative Neutralisationsvorrichtung mit einer auf dem Boden der Kammer 10 liegenden Begasungsvorrichtung dargestellt, und andererseits ist auf dem Filtratablauf 11 ein Standrohr 29 mit Überlauföffnungen 43 aufgesteckt. Das verschmutzte Wasser gelangt durch das Filterelement 25 vorerst in den durch die Profilstäbe 28 gebildeten Zwischenraum zwischen dem Filterelement 25 und der Wand der Kammer 10 und fliesst dort nach unten zu den Öffnungen 31 im Mantel der Kammer 10. Der Filter gemäss den Figuren 12 und 13 wird in einen vorhandenen Container (Behälter) 101 hineingestellt. Das Schmutzwasser wird zu der vom Filterelement umspannten Kammer 10 geleitet. Dabei ist die gesamte Oberfläche des Filterelements 25 wirksam. Dabei fliesst das Filtrat zwischen dem Filterelement 25 und der Kammer 10 nach unten und von dort durch die Öffnungen 31 ins Innere.
Bei zu starker Filterbeladung und damit Reduktion des Durchlaufs kann die gesamte Einheit aus dem Behälter 101 herausgehoben und gewartet werden. Nach dem Einleiten des Filtrats gelangt dieses über den Bereich der Begasungsvorrichtung 34, welche in dieser Ausgestaltung der Erfindung als am Boden der Kammer liegende Platte oder Schlauchelement ausgebildet ist. Auf der Fliessstrecke nach oben bis zu den Öffnungen 43 im Standrohr 29 erfolgt eine Neutralisation bezüglich des Ph-Wertes. Die Lage der Öffnungen 43 im Standrohr 29 ist derart bemessen, dass eine optimale Begasung in der Neutralisationszone 35 erfolgen kann.
Am Standrohr 29 ist die Sonde 37 befestigt, welche die Gaszufuhr automatisch steuert.
In den Figuren ist eine Tauchwand, welche Leichtstoffe, wie Öl, Benzin etc. auf der Oberfläche zurückhalten kann, nicht dargestellt.
Vorteilhaft an dieser Ausgestaltung der Erfindung ist die Möglichkeit, die notwendige Anzahl von Filtern in einem Behälter 101 anzuordnen. D.h. die Anzahl Anlagen kann auf die anfallende Abwassermenge oder deren pH-Wert eingestellt werden. Zudem kann die Neutralisationszone 35 wegen optimaler Wasserdurchleitung und fehlender Kurzschlussgefahr ohne Schlammpartikel sehr klein dimensioniert werden. Das Anlagevolumen wird dadurch auf die Hälfte reduziert. Kleine Behälter sind nicht nur kostengünstig herstellbar, sondern benötigen eine kleine Stellfläche, was auf Baustellen bedeutsam ist. Sie sind auch leicht transportierbar und können auf einfache Weise gewartet werden.
Figur 14 zeigt in vergrössertem Massstab den Bereich X in Figur 12.

In Abhängigkeit der hydraulischen Flächenbelastung entsteht zwischen dem Filter und der Kammer 10 ein unterschiedlich hoher Wasserrückstau. Ein grösserer Wasserrückstau führt zu grösserem Filterdurchsatz. Das Filtrat wird über die Ableitung 11 aus dem Filterinnenraum permanent und drucklos zur nächsten Behandlungsstufe, sofern nötig, abgeleitet. Ohne Wasserzulauf, z.B. während Betriebspausen, Wochenenden etc., entleert sich die Cross-Flow-Kammer 10 auf das Niveau des Filtratauslaufs und das Filterelement fällt dabei trocken. Dem Fouling wird damit entgegen gewirkt.

Der Durchsatz des Filters bzw. dessen Verstopfung/Verblockung kann durch Sensoren 17a in der Kammer detektiert werden. Bei einem zu grossen Überstau kann damit die Zufuhr von Abwasser gestoppt und auch, falls vorhanden, die Zufuhr von Flockungsmitteln oder Adsorbentien oder pH Neutralisation gestoppt werden. Sämtliche für den Betrieb/die Wartung/die Steuerung notwendigen Elemente sind von aussen zugänglich.

Wird ein Filterersatz notwendig, so kann letzterer, d.h. das Filterelement 25 von oben aus der Kammer 10 herausgehoben und die schlaffe schlauchförmige Membran in der Werkstatt ausgetauscht werden. Die Wiedermontage eines ersetzten oder neuen Filtermoduls erfolgt in umgekehrter Weise, indem letzteres von oben in die Kammer eingeführt und auf dem Kragen 26 des Filtertopfs aufgesetzt wird. Es ist auch möglich, das Filterelement 25 mit dem Filtertopf 22 als Modul von der Muffe 21 des Filtratablaufrohres 11 zu heben und auszutauschen, besonders wenn mehrere Filterelemente nebeneinander montiert sind.

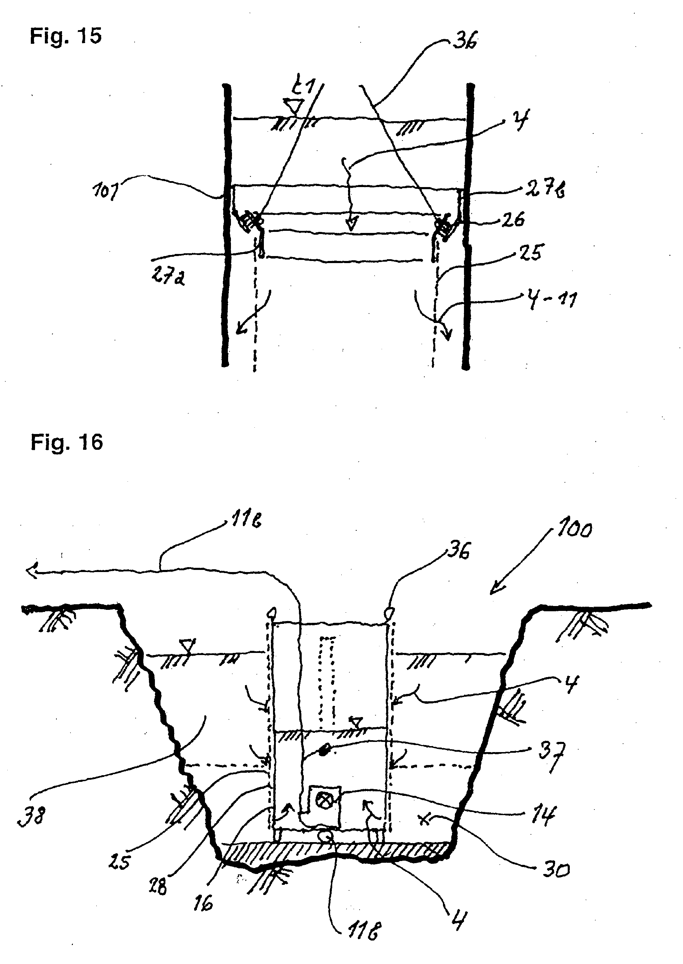

Figur 15 zeigt den oberen Anschluss des Filters, der hängend angeordnet ist. Auf diese Weise lässt er sich überstauen (Stauhöhe t₁). In diesem Beispiel durchströmt das Wasser den Filter 25 von innen nach aussen. Auf diese Weise lässt sich in vorteilhafter Weise der Ein- und Ausbau des Filters in einem Schacht-Mannloch mit geringem Durchmesser, z.B. 60 cm, durchführen, ohne dass in den Behälter eingestiegen werden muss. Durch den höheren Anstaudruck bei t₁ kann die Filteroberfläche bei gleicher Filterleistung reduziert werden. Trotz Überstau ist der Filterzuschluss auslaufsicher.

Im Ausführungsbeispiel gemäss Figur 16 steht der Filter in einem Erdloch-Pumpensumpf 38. Das zuströmende Wasser wird analog des Ausführungsbeispiels gemäss Figur 12 behandelt. Mit der Pumpe 14 kann das Filtrat dem Filterablauf 11 zugeführt und über Leitung 11b abgeleitet werden. Diese Ausführung kann sowohl als Filter und/oder Neutralisationsanlage eingesetzt werden. Sie ist auf schrägem oder unebenem Boden aufstellbar und robust für den Baustelleneinsatz.

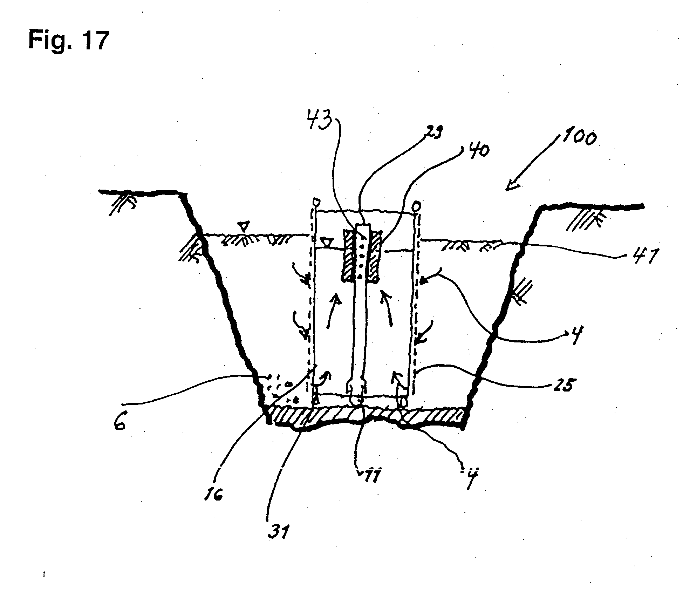

In der Ausgestaltung der Erfindung nach Figur 17 ist über den Öffnungen 43 am Standrohr 29 ein Koaleszenzfilter 40 aufgesetzt. Mit diesem können Leichtstoffe 41, die sich an der Oberfläche ansammeln, zurückgehalten werden. Diese Installation kann im Zusammenhang mit einer Begasung oder im Pumpenbetrieb wie Fig. 16 zeigt erfolgen. Auch diese Ausführung kann als mobile Anlage in einem Erdloch oder in einem Behälter 101 angeordnet werden.

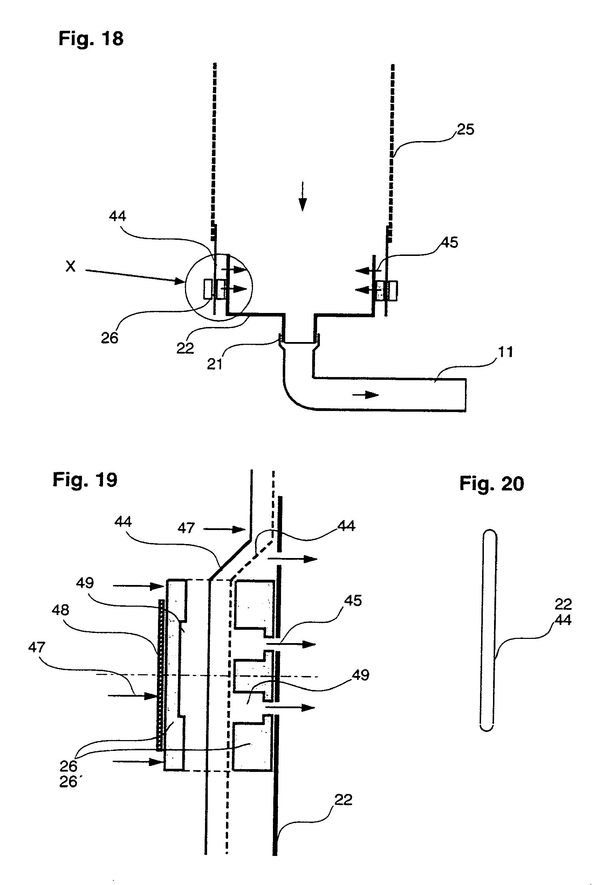

In der Figur 18 ist der untere Teil eines rohrförmigen Filterelements dargestellt. An einem Anschlusskragen 44 am unteren Ende des Filterelements 25 ist eine magnetisch und hydrostatisch wirkende Dichtung angeordnet. Diese umfasst Dichtungselemente 26, 26', welche beispielsweise ein Magnetband bzw. ein Band mit in diesem eingesetzten Magnetmaterial umfassen. Durch den Magnetismus des Dichtungselements 26 wird letzteres an den Filtertopf 22 angezogen, der aus einem ferromagnetischen Material hergestellt ist oder auf dem ein ferromagnetisches Band 26' aufgebracht ist. Die magnetische Haftung des Filterelements 25 resp. der Anschlusskragen 44 am Filtertopf 22 ermöglicht es, dass das Filterelement 25 mit dem Kragen am Filtertopf 22 gehalten wird und eine Abdichtung bewirkt wird. Durch den ansteigenden hydraulischen Druck der von aussen auf das Filterelement wirkenden Wassersäule wird die Dichtung und auch der Anschlusskragen 44 des Filters zusätzlich an den Filtertopf 22 angepresst und dadurch die Dichtwirkung erhöht. Selbstverständlich kann diese Dichtungsform und Befestigung des Filterelements 25 nicht nur für rohrförmige Filter verwendet werden, sondern gleichfalls an plattenfiltern gemäss Figur 20.
In der Detailansicht der magnetisch-hydrostatischen Dichtung gemäss Figur 19 sind zusätzlich weitere Merkmale dieses Befestigungs- und Dichtungssystems dargestellt. Zum einen ist das Magnetband 26, das von aussen wirkt, ersichtlich und bei zylindrischen oder ovalen Filterelementen kann auf diesen zusätzlich ein Spannband 48 aufgebracht sein. Weiter ist mit einem Pfeil 47 der hydrostatische Druck, der rechtwinklig auf das Magnetband 26 wirkt, dargestellt. Auf der Aussenfläche des Filtertopfs 22 ist ein zusätzliches Magnetband 26' dargestellt, welches die Anziehungskraft der von aussen wirkenden Magnete an den Filtertopf 22 erhöht. Um sicherzustellen, dass der hydrostatische Druck von aussen nicht durch den hydrostatischen Druck, der sich durch Aufbau einer Wassersäule im Innern des Filterelements 25 aufbauen kann, aufgehoben wird, sind im Magnetband ein oder mehrere Hohlraumkanäle 49 ausgenommen, die mit Druckentlastungen 45 verbunden sind.
Der Anschlusskragen 44 besteht vorzugsweise aus einem wasserdicht beschichteten, möglichst dünnen textilem Band.

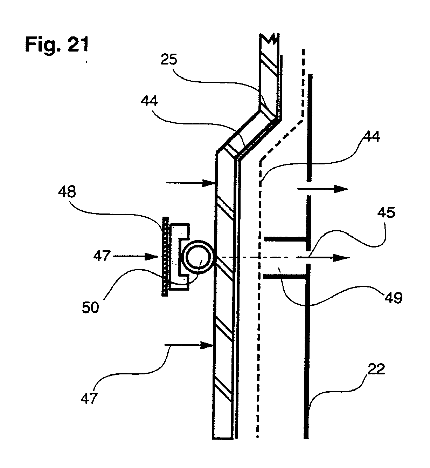

In Figur 21 ist eine mechanisch-hydrostatische Abdichtung für den dichten Abschluss eines Filterelements 25 auf dem Filtertopf 22 ersichtlich. Die Filtermembrane wird unten auf der Innenseite mit einem Anschlusskragen 44 versehen. Dieser wird mit einem O-Ring 50 auf den Druckentlastungsraum 49 gedrückt. Diese Ausführungsform lässt sich wiederum für flach-ovale und ebene Körper anwenden. Wird der O-Ring 50 mit einem Gel oder einer Flüssigkeit gefüllt, kann er den vom Spannband einwirkenden mechanischen Druck gleichmässig auf die gesamte Abwicklung übertragen.

## Patentansprüche

1. Verfahren zum Reinigen von mit Grob-, Fein- und Feinststoffen belastetem Abwasser von Baustellen, aus Bergbau- oder Industriebetrieben, bei welchem das verschmutzte Wasser durch Schwerkraft oder mit einer Pumpe in einen Behälter eingeleitet wird, **gekennzeichnet durch** die folgenden Verfahrensschritte:
a) tangentiales Einleiten des belasteten Wassers in den bodennahen Bereich des des Behälters,
b) Trennen der grösseren Feststoffe **durch** Gravitation, Zentrifugalkraft und Absetzen am Boden des Behälters und eine hydraulische Trennung der Sedimente,
c) Aufteilung des rotierenden Wasserstroms in eine Wasserwalze die entlang der Behälterwand nach unten zirkuliert und in eine innen liegende beruhigte erste Zone, in welcher Schwerstoffe sedimentiert und Leichtstoffe in der Behältermitte mit dem Fluidstrom aufsteigen können, aus dem langsam im aufsteigenden Fluidstrom Feinpartikel abgeschieden werden,
d) Sammeln und Abscheiden der aufschwimmbaren Stoffe an der Fluidoberfläche,
e) Überleiten des von aufschwimmbaren und mittelgrossen und grossen Feststoffen befreiten Abwassers in einen Querstromfilter und Sedimentieren und Ableiten kleiner und kleinster Feststoffe in weiter beruhigter Umgebung,
f) Hindurchtretenlassen des von den sedimentierten Feststoffen befreiten Wassers **durch** einen austauschbaren Filter und
g) Ableiten des gereinigten Wassers.

2. Verfahren nach Anspruch 1, **dadurch gekennzeichnet, dass** die im Verfahrensschritt b) sedimentierten Feststoffe aus dem Bodenbereich des Behälters abgeleitet werden.

3. Verfahren nach Anspruch 2, **dadurch gekennzeichnet, dass** die im Crossflow-Raum sedimentierten und vom Filterelement (25) zurückgehaltenen feinen Feststoffe mit den Feststoffen aus dem Behälter zusammengeführt oder separat abgeleitet werden.

4. Verfahren nach einem der Ansprüche 1 bis 3, **dadurch gekennzeichnet, dass** dem Abwasser vor dem Einleiten in den Behälter oder im Behälter ein Wirkstoff zum Ausfällen von Stoffen oder Adsorbieren gelöster Stoffe zugegeben wird und die ausgefällten Stoffe mit den Feststoffen sedimentiert werden.

5. Vorrichtung zum Reinigen von mit Grob-, Fein- und Feinststoffen belastetem Abwasser aus Baustellen, aus Bergbau- oder Industriebetrieben, umfassend einen Behälter (101) mit einem Zulauf (1) und einem Filter sowie einem Sammelraum (30) zum Sammeln der aus dem Abwasser ausgeschiedenen Feststoffe,
**dadurch gekennzeichnet, dass**
- im Behälter (101) eine Trennvorrichtung (2) eingesetzt ist, in welche das belastete Abwasser eingeleitet wird und die grösseren Feststoffe (6) gravitativ ausgeschieden werden,
- an der Trennvorrichtung (2) ein oder mehrere das ausströmende Wasser an die Behälterinnenwand lenkende Mittel (3) ausgebildet sind,
- am Boden des Behälters (101) ein Sammelraum (30) und am oberen Ende des Behälters (101) eine Sammelrinne (7) oder ein radialer Überlauf angeordnet sind,
- die Sammelrinne (7) mit radialem Überlauf mit einer von oben in den Behälter (101) ragenden Kammer (10) verbunden ist, welche unten an ein Schlammablaufrohr (12) angeschlossen ist,
- in der Kammer (10) ein rohrförmiges Filterelement (25) eingesetzt ist, welches unten durch einen mit einem Filtratablauf (11) verbundenen Filtertopf (22) verbunden ist.

6. Vorrichtung nach Anspruch 5, **dadurch gekennzeichnet, dass** die Lenkvorrichtung (3) ein- und verstellbar ist.

7. Vorrichtung nach einem der Ansprüche 5 oder 6, **dadurch gekennzeichnet, dass** die Kammer (10) und das Filterelement (25) mit dem Filtertopf (22) als austauschbares Filtermodul ausgebildet ist.

8. Vorrichtung nach Anspruch 7, **dadurch gekennzeichnet, dass** das Filterelement (25) rohrförmig oder plattenförmig ausgebildet ist.

9. Vorrichtung nach einem der Ansprüche 5 bis 8, **dadurch gekennzeichnet, dass** an der Behälterwand Leitmittel angebracht sind.

10. Filter für die Filtration von Feststoffen aus Flüssigkeiten und Gasen, umfassend einen oder mehrere Filterkörper oder ein oder mehrere Filtermembranen (25) mit einem Filtertopf (22) mit einem Filtratablauf (11) einem Stützkörper (28) zum Abstützen und zur Verhinderung des Kollabierens des/der Filterkörpers oder der Filtermembran (25), **dadurch gekennzeichnet, dass** ein oder mehrere Stützkörper (28) und der Filtertopf (22) als Moduleinheit mit einem lösbaren Anschluss mit dem Filtratablauf (11) verbunden ist.

11. Filter nach Anspruch 10, **dadurch gekennzeichnet, dass** die Filtermembran (25) mit einem vorstehenden reissfesten und wasserdichten Anschlusskragen (44) versehen ist, der zwischen die Magnetdichtung (26,26') und Filtertopf (22) festgeklemmt wird.

12. Filter nach Anspruch 11, **dadurch gekennzeichnet, dass** der Anschlusskragen (44) und das Dichtungsband (26) durch den statischen Wasserdruck an den Filtertopf (22) oder inneres Dichtungsband (26') anpressbar ist und dass zwischen dem Anschlusskragen (44) und dem Filtertopf (22) und dem Dichtungsband (26') mindestens ein oder mehrere umlaufende druckentlastete Hohlräume (49) angebracht sind.

13. Filter nach Anspruch 11, **dadurch gekennzeichnet, dass** die Magnetdichtung ein Magnetband (26') mit einer mechanischen Spannvorrichtung umfasst.
